# FASCICULE DE BREVET EUROPEEN

(11) **EP 4 358 691 B1**
(45) Date de publication et mention de la délivrance du brevet: **18.06.2025**
(21) Numéro de dépôt: 22740522.2
(22) Date de dépôt: 24.06.2022
(51) Int. Cl.: A01D 46/28

(54) **MACHINE DE VENDANGE MÉCANIQUE AVEC UN MOYEN DE SUIVI EN CONTINU DU POIDS DE VENDANGE**
MECHANISCHE TRAUBENERNTEMASCHINE MIT MITTELN ZUR KONTINUIERLICHEN ÜBERWACHUNG DES GEWICHTS DER TRAUBENERNTE
MECHANICAL GRAPE HARVESTING MACHINE WITH A MEANS FOR CONTINUOUSLY MONITORING THE WEIGHT OF THE GRAPE HARVEST

(30) Priorité: 25.06.2021 FR 2106819
(43) Date de publication de la demande: 01.05.2024
(73) Titulaire: PELLENC, 84120 Pertuis (FR)
(72) Inventeur: HAMEL, Matthieu, 84120 Pertuis (FR); ROGIER, Alexandre, 84160 Cadenet (FR)
(74) Mandataire: Hautier IP
(86) Numéro de dépôt international: PCT/IB2022/055869
(87) Numéro de publication internationale: WO 2022/269552

(56) Documents cités:
- EP-A1- 0 893 049
- EP-A1- 1 336 333
- FR-A2- 2 408 291
- US-A1- 2007 012 018
- US-A1- 2019 335 650

## Description

### Domaine technique

L'invention concerne une machine à vendanger capable de procéder à la récolte de raisin et de le stocker dans une benne tout en évaluant la quantité de raisin récolté.

### Technique antérieure

Dans le secteur de la vigne, la récolte du raisin est historiquement mise en œuvre manuellement, mais est de plus en plus souvent mise en œuvre mécaniquement, au moyen d'une tête de récolte embarquée ou tractée d'une machine à vendanger qui parcourt les rangs de vignes d'un vignoble, la tête de récolte séparant mécaniquement les grains de raisin des pieds de vignes à l'aide d'une action mécanique de secouage et les stockant temporairement dans une benne de stockage jusqu'au vidage de la benne par basculement au niveau d'un point de collecte.

Les machines à vendanger de ce type (cf US 2019/335650 A1) peuvent être automotrices (le véhicule tracteur embarque une tête de récolte et enjambe le rang de vigne) ou tractées (la tête de récolte enjambant le rang de vigne est remorquée par un véhicule tracteur circulant entre deux rangs de vigne).

Il est à noter que l'on désigne par « vendange mécanique » l'opération de récolte du raisin au moyen d'une machine à vendanger et par « vendange » le raisin récolté.

Dans ce contexte, contrôler en continu le poids de vendange stockée dans la benne présente de multiples avantages, comme la possibilité pour le vendangeur de connaître, en temps réel, le rendement à l'hectare de leurs parcelles de terrain, d'établir des cartographies parcellaires utilisables pour orienter par exemple localement la quantité de fertilisants et/ou le volume et le type de traitements phytosanitaires à apporter ou pour adapter les traitements en cours d'année, ou encore pour respecter des quotas réglementaires de vendange par hectare voire pour ajuster la quantité de vendange à livrer à la cave pour qu'elle soit vinifiée le plus rapidement possible.

Ainsi, le document de brevet FR 2 768 222 B1 décrit un dispositif de pesage embarqué en continu de récolte employant une première balance électronique évaluant le poids d'un plateau de pesée sur lequel passe un système d'entraînement de la récolte

Une deuxième balance électronique disposée à proximité de la première et supportant une masse fixe connue est utilisée comme témoin de manière à corriger les perturbations dynamiques affectant les deux balances de manière sensiblement équivalente.

Cependant, ce dispositif nécessite un système d'entraînement capable de contenir le jus du raisin, et il n'est pas conçu pour éviter la prise en compte d'objets indésirables (morceaux de pieds de vigne ou de piquets etc...).

Le document Brevet WO2018/122280 divulgue lui aussi une machine à vendanger et un procédé apte à mesurer en continu le poids de la vendange stockée dans ses bennes.

Ce poids est évalué par une mesure de la pression hydraulique dans les vérins de levage de la machine et nécessite un étalonnage systématique au moment du vidage des bennes en comparant des pressions hydrauliques dans les vérins de levage de la machine avant et après vidage.

Ce système manque de fiabilité car la pression de l'huile dans les vérins évolue avec sa température d'où la nécessité d'opérer des procédures spécifiques d'étalonnage au moment du vidage des bennes.

La meilleure précision obtenue se fait donc seulement en statique au moment du vidage à condition toutefois que les roues soient très stables à cet instant.

Les vérins de levage considérés sont par ailleurs les vérins reliant l'assiette du châssis aux roues de la machine, supportant ainsi le poids de l'ensemble du châssis de récolte, de la vendange en cours de récolte comportant des déchets indésirables et de la vendange accumulée dans les bennes.

La précision de mesure est donc loin d'être satisfaisante compte tenu de la complexité de ce procédé.

Le dispositif et le procédé divulgués par ce document ne sont ainsi pas adaptés à une mesure en continu et précise du poids de la vendange stockée dans les bennes pendant la vendange mécanique.

### Exposé de l'invention

L'invention a pour objectif de fournir un moyen adapté au contrôle précis et en continu du poids de vendange stockée dans les bennes de la tête de récolte d'une machine à vendanger.

A cette fin, l'invention porte plus particulièrement sur une machine à vendanger destinée à récolter une vendange, comportant un châssis monté sur au moins un train de roues qui sont chacune mobiles autour d'un axe de train de roue, ledit châssis étant arrangé de manière à enjamber un rang de vigne lors d'une vendange mécanique, un ensemble de secouage du rang de vigne en liaison mécanique avec le châssis, apte à séparer la vendange du rang de vigne, un ensemble de collecte et de convoyage de la vendange de l'ensemble de secouage jusqu'à une ou plusieurs bennes de stockage, les bennes de stockage étant chacune fixées à une chaise de benne associée montée pivotante autour d'un arbre pivot de benne lié mécaniquement au châssis pour assurer le vidage des bennes de stockage, et un dispositif de mesure de poids de vendange accumulée dans les bennes de stockage, machine à vendanger dans laquelle chaque benne de stockage est reliée à la chaise de benne associée par l'intermédiaire de capteurs de charge, les capteurs de charge étant des capteurs en flexion de forme allongée comportant chacun deux extrémités de fixation, une première extrémité de fixation étant fixée à la benne de stockage et une deuxième extrémité de fixation étant fixée à la chaise de benne associée de façon à ce que la benne de stockage soit suspendue à la chaise de benne associée, les extrémités de fixation des capteurs de charge sont disposées au-dessus de l'ensemble de secouage lorsque la machine est située sur un sol plan horizontal, chaque capteur de charge est alimenté par le dispositif de mesure de poids de vendange pour délivrer à tout moment de la vendange mécanique un signal de capteur, et le dispositif de mesure est configuré pour traiter les signaux des capteurs de charge et délivrer de façon continue ou cyclique un signal de mesure représentatif du poids de vendange accumulée par la machine à vendanger dans les bennes de stockage.

La machine à vendanger décrite ci-dessus est capable de mesurer en continu le poids de vendange stockée dans les bennes de stockage au cours d'une vendange mécanique tout en assurant le maintien mécanique, notamment lors de la vendange mécanique ou du vidage.

Le maintien mécanique des bennes de stockage est assuré par les capteurs de charge, qui remplissent les deux fonctions de suspendre chaque benne à une chaise de benne qui lui est associée, c'est-à-dire d'éviter toute fixation mécanique de la benne avec tout élément autre que les capteurs de charge, et de détecter les forces que les bennes de stockage exercent sur chacun d'eux, ce qui permet en additionnant leurs signaux de capteurs d'en déduire le poids des bennes de stockage et de leur contenu, la vendange, qui sera acheminé à la cave après le vidage de la benne.

Chaque benne de stockage étant fixée mécaniquement à la chaise de benne associée, la stabilité mécanique des bennes de stockage est assurée, notamment lors de la vendange mécanique ou du vidage.

En outre, les capteurs de charge étant situés au-dessus de l'ensemble de secouage, les opérations de secouage perturbent beaucoup moins les signaux de capteur représentant le poids des bennes de stockage lors de la vendange mécanique que s'ils étaient situés à un même niveau horizontal que l'ensemble de secouage.

Ainsi, les caractéristiques de la machine à vendanger permettent effectivement un contrôle continu du poids des bennes de stockage en cours de vendange mécanique, même en terrain irrégulier présentant des pentes et des dévers, circonstances courantes dans les vignobles.

La machine à vendanger peut présenter pour chaque benne de stockage les caractéristiques suivantes :
- les extrémités de fixation des capteurs de charge peuvent être disposées au-dessus d'un centre de gravité de la benne de stockage lorsque la machine est située sur un sol plan horizontal ;
- lorsque la machine est située sur un sol plan horizontal, le centre de gravité de la benne de stockage à vide peut être situé à plus de 15% d'une profondeur de la benne de stockage sous les extrémités de fixation ;
- la machine peut comprendre au moins trois capteurs de charge suspendant la benne de stockage à la chaise de benne, pouvant être répartis de manière à ce que deux de ces capteurs soient distants d'au moins 60% de la largeur de la benne de stockage selon une direction sensiblement parallèle à l'axe de train de roues, et à ce que deux de ces capteurs soient distants d'au moins 70% d'une longueur de la benne de stockage selon une direction sensiblement horizontale et perpendiculaire à l'axe de train de roue, la benne de stockage étant considérée en position de vendange sur un sol plan horizontal ;
- la machine peut comprendre quatre capteurs de charge suspendant la benne de stockage, un premier et un deuxième de ces capteurs pouvant être disposés à une partie avant de la benne de stockage et distants l'un de l'autre d'au moins 60% de la largeur de la benne de stockage selon une direction sensiblement parallèle à l'axe de train de roues, un troisième et un quatrième de ces capteurs de charge pouvant être disposés à une partie arrière de la benne de stockage et distants l'un de l'autre d'au moins 60% de la largeur de la benne de stockage, le premier et le troisième des capteurs de charge pouvant être distants l'un de l'autre d'au moins 70% de la longueur de la benne de stockage selon une direction sensiblement horizontale et perpendiculaire à l'axe de train de roue, la benne de stockage étant considérée en position de vendange sur un sol plan horizontal ;
- la benne de stockage peut comporter des arêtes montantes de benne, les premières extrémités de fixation des capteurs de charge pouvant être fixées à moins de 20% d'une largeur de la benne de stockage de l'une desdites arêtes montantes de benne ;
- au moins un des capteurs de charges peut être situé entre la benne de stockage et une cabine de pilotage de la machine à vendanger et peut avoir un axe longitudinal sensiblement parallèle à l'axe de train de roues de la machine à vendanger ; et
- un rapport d'une somme de valeurs absolues des capacités de mesure des capteurs de charges sur un poids total maximal attendu de la benne de stockage peut être supérieur à 2.

### Brève description des dessins

La présente invention sera mieux comprise et d'autres avantages apparaîtront à la lecture de la description détaillée d'un mode de réalisation pris à titre d'exemple nullement limitatif et illustré par les dessins annexés, dans lesquels :
[Fig 1A]- la figure 1A illustre une vue latérale d'une machine à vendanger automotrice selon l'invention, dans une position de vendange mécanique ;
[Fig 1B]- la figure 1B illustre une vue d'en haut de la machine à vendanger de la figure 1A ;
[Fig 1C]- la figure 1C illustre la machine à vendanger de la figure 1A dans une position de vidage;
[Fig 2A]- la figure 2A est un figure tridimensionnelle (3D) représentant une benne de stockage et sa chaise de benne;
[Fig 2B]- la figure 2B est une vue latérale d'une benne de stockage vide montrant la position de son centre de gravité;
[Fig 3A]- la figure 3A est un schéma représentant un capteur de charge en flexion et sa fixation entre une benne de stockage et une chaise de benne ;
[Fig 3B]- la figure 3B est un extrait d'une vue 3D de la machine à vendanger de la figure 1A en amont d'une benne de stockage au niveau de sa fixation avec la chaise de benne;
[Fig 3C]- la figure 3C est un extrait d'une vue 3D de la machine à vendanger de la figure 1A en aval d'une benne de stockage au niveau de sa fixation avec la chaise de benne;
[Fig 4]- la figure 4 représente l'évolution au cours du temps des poids mesurés par un ensemble de 8 capteurs de charge d'une machine à vendanger enregistrés lors d'une vendange mécanique, ainsi que leur somme.
[Fig 5]- la figure 5 représente un schéma synoptique de traitement des signaux des capteurs de charge.

### Description d'un mode particulier de réalisation de la machine selon l'invention

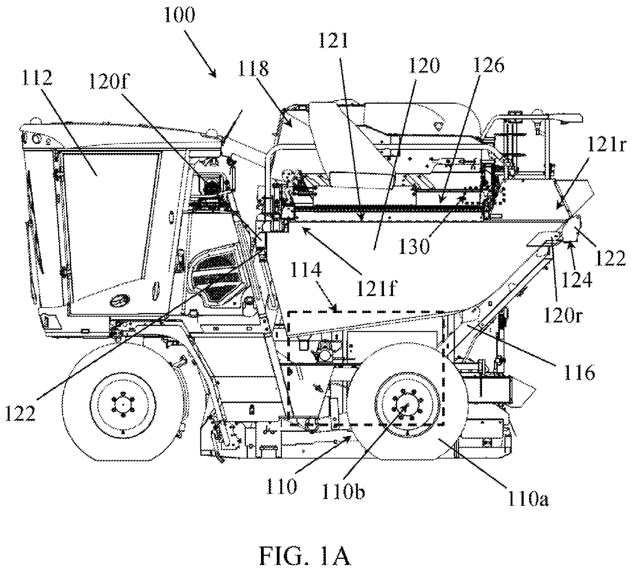

Ce mode de réalisation est illustré par les figures 1A à 5.

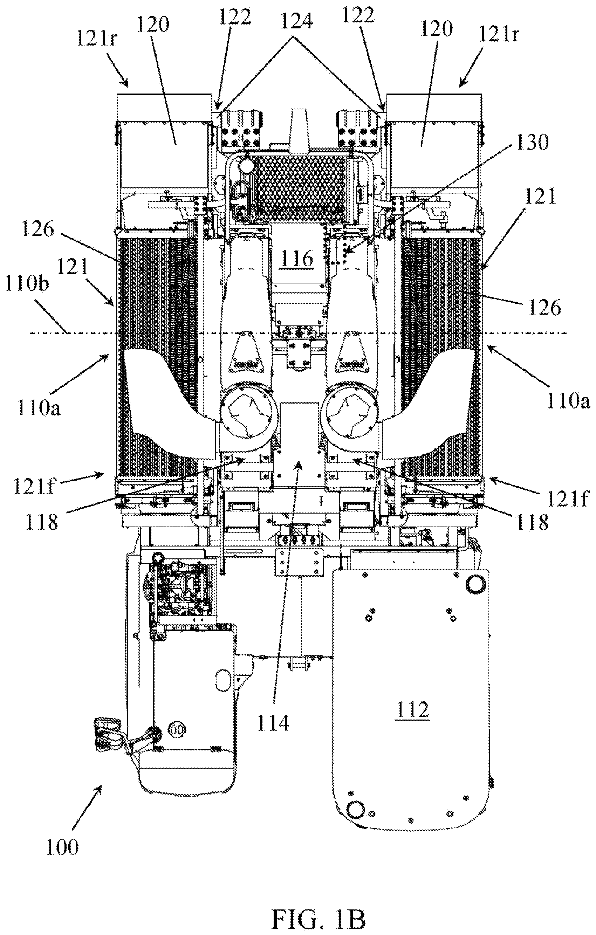

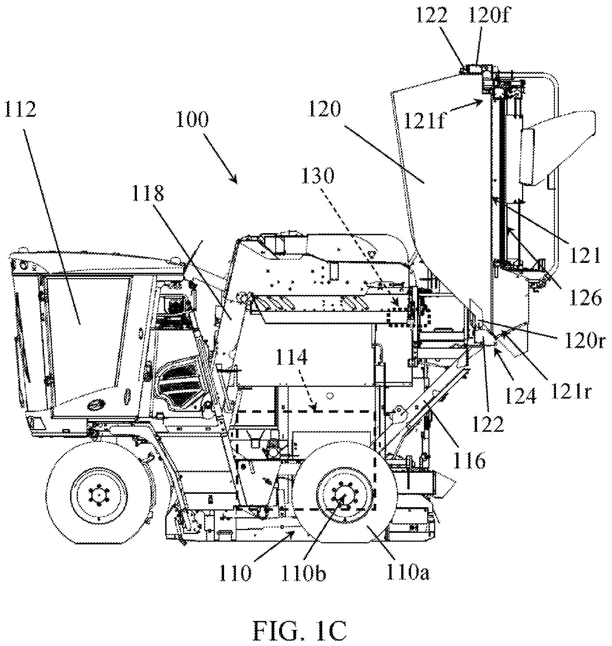

Les figures 1A à 1C illustrent une machine à vendanger 100, la figure 1A la montrant en vue latérale dans une configuration apte à la vendange mécanique, la figure 1B étant une vue de dessus de la machine dans cette même configuration et la figure 1C étant une vue latérale montrant la machine à vendanger dans une configuration de vidage.

La machine à vendanger 100 comprend au moins un train de roues 110 supportant notamment une cabine de pilotage 112 et un ensemble de secouage 114, localisé dans la machine à vendanger 100 par des traits pointillés, monté sur un châssis 116.

Le train 100 de roues comprend des roues 110a qui sont chacune mobiles autour d'un axe de train de roues 110b.

Lorsque le châssis 116 est monté sur ou constitue une partie d'un châssis de tracteur supportant la cabine de pilotage, la machine à vendanger est en version automotrice et le châssis de tracteur comporte alors deux trains de roues pour diriger et mouvoir la machine à vendanger.

Le châssis 116 peut aussi ne comporter qu'un seul train de roues 110 et constituer alors une partie d'une machine à vendanger tractée, qui sera tractée par un tracteur agricole comportant aussi une cabine de pilotage et circulant entre les rangs de vigne pour mouvoir la machine à vendanger.

Le châssis 116 est conçu de manière à enjamber un rang de vigne lorsque la machine à vendanger met en œuvre une opération de vendange mécanique, opération au cours de laquelle on récolte une vendange, comportant essentiellement des baies de raisin détachées du rang de vigne qui les porte, associées à du jus de raisin quand les baies sont éclatées, par un secouage mécanique à haute fréquence (de l'ordre de 5 à 10 Hz) appliqué au niveau de la zone du rang de vigne comportant les baies de raisin au moyen de l'ensemble de secouage 114.

La vendange détachée du rang de vigne est récupérée par un ensemble de collecte et de convoyage 118 fixé sur le châssis 116, ensemble comportant par exemple au moins une bande de convoyage sans fin associée à des tasseaux ou des godets, et est acheminée vers deux bennes de stockage 120 situées symétriquement d'un côté et de l'autre de la machine 100, comme le montre la figure 1B, proches du châssis 116 et derrière la cabine de pilotage 112, dans lesquelles elle chute pour y être stockée jusqu'au vidage des bennes de stockage par basculement, opération illustrée par la figure 1C avec une benne 120 visiblement basculée en position verticale, c'est-à-dire en position de vidage.

Par opposition à la figure 1C, la figure 1A illustre la machine à vendanger dans une configuration de vendange mécanique sur un sol plan horizontal, avec une benne de stockage 120 en position horizontale, c'est-à-dire en position de vendange mécanique.

Aux fins de vidage par basculement, chaque benne de stockage 120 est montée sur une chaise de benne 122 à laquelle elle est associée, chaque chaise de benne étant montée de manière pivotante autour d'un arbre pivot de benne 124 lié mécaniquement au châssis 116 pour faire passer la benne de stockage associée de la position de vendange mécanique à la position de vidage.

Dans la suite de ce document, la description s'attachera généralement à une seule des bennes de stockage, étant entendu que les caractéristiques de l'une des bennes et de son couplage avec la machine à vendanger, par l'intermédiaire d'une chaise de benne pour l'aspect mécanique, s'appliquent également à l'autre benne.

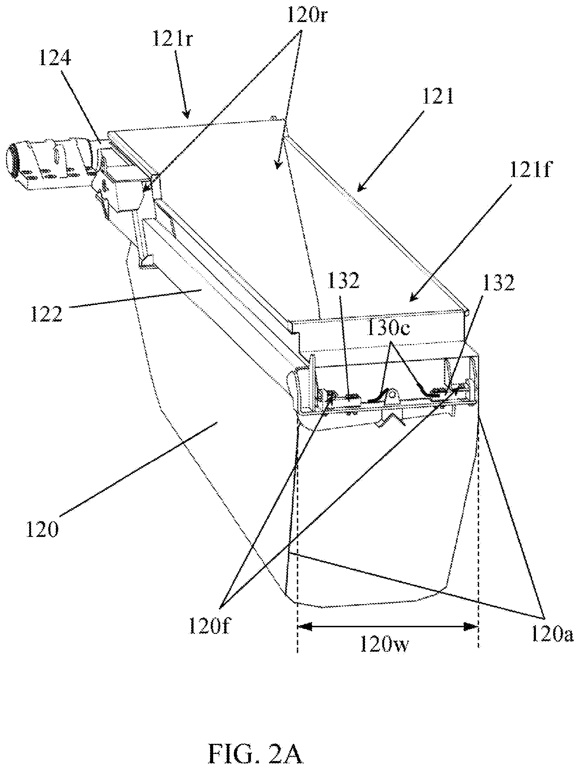

La figure 2A montre une vue 3D d'une benne de stockage 120 associée à sa chaise de benne 122 et à l'arbre pivot de benne 124.

La benne de stockage 120 présente des formes géométriques généralement prismatiques adaptées pour se conformer à la machine à vendanger et définissant un conteneur étanche d'un volume donné de vendange avec une ouverture 121 d'entrée de benne de forme généralement rectangulaire lorsque vue d'en haut, située en haut de la benne de stockage et au travers de laquelle la vendange est déversée.

L'ouverture 121 d'entrée de benne a une forme allongée, plus longue (dans la direction de déplacement de la machine) que large et présente une partie avant 121f correspondant à l'avant de la machine à vendanger, proche de la cabine de pilotage, et une partie arrière 121r correspondant à l'arrière de la machine à vendanger, proche du pivot de vidage 124 de la chaise de benne 122.

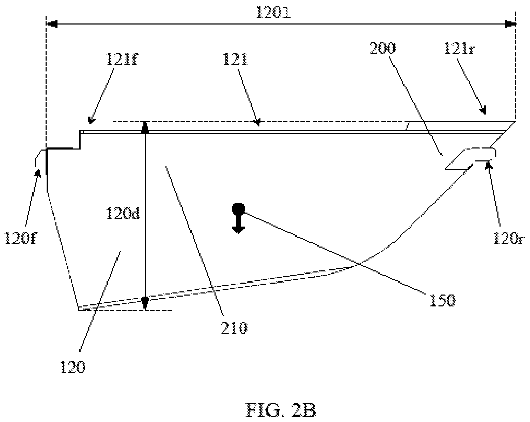

On peut caractériser la benne de stockage par sa largeur 120w, correspondant à son étendue maximale dans une direction sensiblement parallèle à l'axe 110b de train de roues de la machine, et par sa longueur 120l, correspondant à son étendue maximale selon une direction sensiblement horizontale et perpendiculaire à l'axe de train de roue, la benne de stockage étant considérée en position de vendange mécanique sur un sol plan horizontal, comme illustré aux figures 2A et 2B, respectivement.

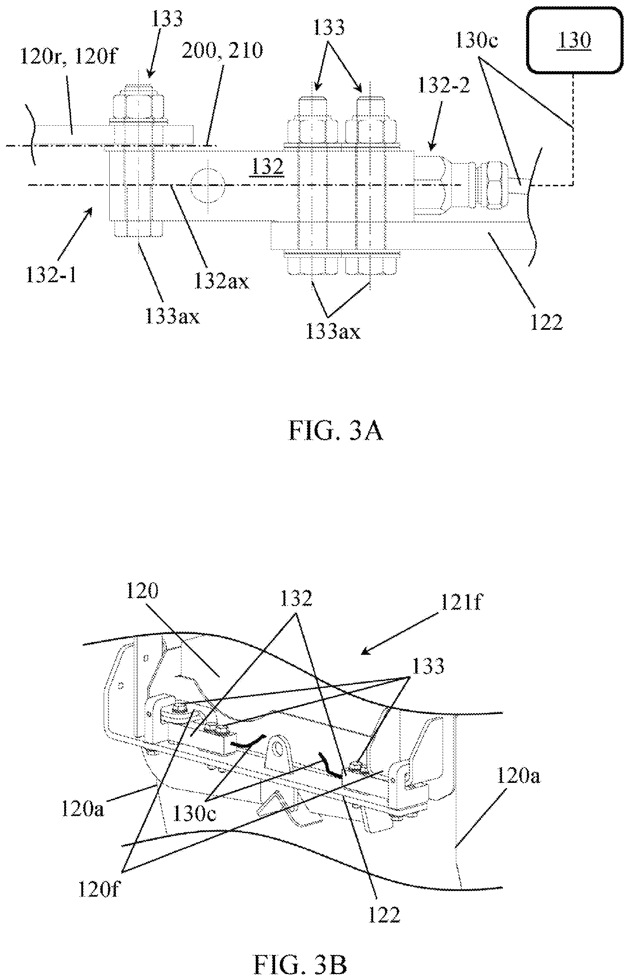

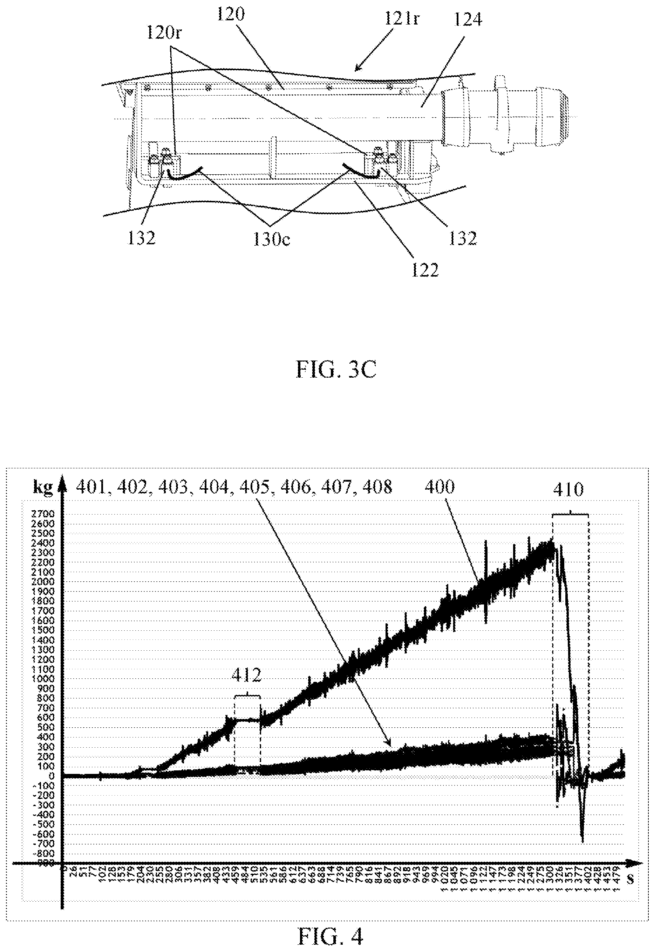

La benne de stockage 120 comporte deux pattes de fixation 120f, visibles notamment dans les figures 2A, 2B et 3B, disposées dans une largeur de la benne de stockage à proximité de la partie avant 121f de l'ouverture 121 d'entrée de benne, et deux pattes de fixation arrière 120r, visibles notamment dans les figures 2B et 3C, disposées dans une largeur de la benne de stockage à proximité de la partie arrière 121r de l'ouverture 121 d'entrée de benne.

Comme illustré à la figure 2B, les pattes de fixation 120f définissent un plan de fixation horizontal avant 210 et les pattes de fixation 120r définissent un plan de fixation horizontal arrière 200, la benne de stockage étant considérée dans une position de vendange mécanique sur un sol plan horizontal, position illustrée en figure 1A.

Les deux plans de fixation horizontaux 200 et 210 sont disposés entre un plan horizontal défini par l'ouverture 121 d'entrée de benne (et correspondant au point vertical le plus bas de l'ouverture 121 lorsque la machine est située sur un terrain plan horizontal, en configuration de vendange mécanique) et un plan horizontal comportant un centre de gravité 150 de la benne de stockage schématisé dans la figure 2B pour une benne de stockage vide.

Les pattes de fixation 120r et 120f, au nombre de 4 au total, servent à suspendre rigidement la benne de stockage 120 à une chaise de benne 122 par l'intermédiaire de 4 capteurs de charges 132, la benne de stockage étant maintenue distante de la chaise de benne par l'intermédiaire des capteurs de charge, et maintenue rigidement sur la machine à vendanger notamment pendant les opérations de vendange mécanique ou de vidage.

Il est précisé que la benne de stockage peut être un container simple comprenant des parois définissant une partie étanche apte à stocker la vendange, mais elle peut être constituée de plusieurs parties, par exemple d'un container étanche associé à un châssis qui lui est rigidement fixé.

Dans ce dernier cas, ce sont l'ensemble des parties constituant la benne de stockage qui sont suspendues à la chaise de benne par l'intermédiaire des capteurs de charge.

Comme illustré à la figure 3A, chaque capteur s'étend selon un axe longitudinal de capteur 132ax et comporte deux extrémités de fixation, une première extrémité de fixation 132-1 étant fixée à l'une des pattes de fixation 120f, 120r de la benne de stockage et une deuxième extrémité de fixation 132-2 étant fixée à la chaise de benne 122 de façon à ce que la benne de stockage 120 soit suspendue à la chaise de benne 122, les capteurs formant un ensemble de suspension de la benne de stockage à la chaise de benne.

On entend par « suspendue » le fait que la benne de stockage soit entièrement maintenue en l'air par la chaise de benne via les capteurs de charge 132, sans que d'autres éléments que les capteurs de charge n'aient une contribution significative au maintien mécanique de la benne de stockage.

On considère par exemple que les câbles de connexion électrique 130c reliant les capteurs au dispositif 130 de mesure ne constituent pas des éléments ayant une contribution mécanique significative au maintien de la benne de stockage.

Il en est de même, le cas échéant, pour des câbles électriques ou des flexibles d'alimentation hydraulique d'une table de tri.

La chaise de benne 122 est une structure rigide entourant la benne de stockage sur 3 côtés, notamment en regard des pattes de fixation 120f et 120r.

Les fixations se font au moyen de montages par boulons 133 traversant les corps des capteurs perpendiculairement à leurs axes longitudinaux respectifs, les boulons 133 étant visibles par exemple à la figure 3B, de telle manière que, en cours de vendange mécanique, les axes horizontaux des capteurs s'étendent horizontalement, les axes longitudinaux 133ax des boulons s'étendant verticalement, toujours dans une configuration de vendange mécanique sur un sol plan horizontal.

La benne de stockage est ainsi rigidement fixée à la chaise de benne associée et peut supporter les contraintes mécaniques en configuration de vendange mécanique ou de vidage.

La configuration ci-dessus a pour avantage un bon maintien de la benne de stockage conjugué à une configuration apte à évaluer précisément le poids du contenu de cette bennes de stockage et de ses éventuels accessoires.

Un tel montage permet d'assurer une mesure fiable du poids de vendange, puisque seul l'ensemble du poids porté par une benne de stockage repose sur les capteurs de charge.

En ce qui concerne les positionnements verticaux des capteurs de charge, qui ont également un rôle de suspension mécanique de la benne de stockage à laquelle ils sont fixés, les extrémités de fixation des capteurs de charge, et donc les pattes de fixation 120r et 120f, sont disposées au-dessus du centre de gravité 150 de la benne de stockage lorsque la machine est située sur un sol plan horizontal, le centre de gravité de la benne de stockage à vide étant de préférence situé à plus de 15% d'une profondeur 120d de la benne de stockage sous les extrémités de fixation.

La profondeur 120d de la benne de stockage s'entend comme la distance verticale séparant le point le plus haut de l'ouverture 121 d'entrée de benne du point le plus bas de la benne de stockage, comme indiqué dans la figure 2B, dans une configuration de position horizontale de la benne de stockage, c'est-à-dire avec la benne de stockage dans une position de vendange, la machine étant sur un sol plan horizontal.

Une telle configuration a pour avantage une amélioration sensible de la stabilité mécanique de la benne de stockage suspendue, en particulier en terrain irrégulier et/ou présentant de la déclivité.

Afin de limiter les perturbations de la pesée par l'opération de secouage qui génère des vibrations mécaniques non seulement au niveau du rang de vigne mais également au niveau de la machine à vendanger, les extrémités de fixation des capteurs sont disposées dans des plans horizontaux situés au-dessus de l'ensemble de secouage matérialisant la zone où se localise la vendange mécanique et donc où les vibrations sont maximales, la machine étant considérée lors d'une vendange mécanique sur terrain horizontal.

Une telle disposition a l'avantage d'éloigner les capteurs de la zone où se concentrent les vibrations générées pour l'opération de secouage, de sorte que le niveau de vibration aux emplacements des capteurs reste acceptable pour les mesures de poids.

Le fait de disposer les capteurs au-dessus du centre de gravité de la benne de stockage renforce aussi l'atténuation des efforts par l'inertie des masses intervenant au niveau du centre de gravité.

Dans des conditions normales, la présence d'une quantité de vendange dans la benne de stockage ne fera que renforcer sa stabilité, la densité de la vendange étant plus forte en fond de cuve en raison du tassage des grains de raisin et de la présence de jus.

En ce qui concerne le nombre et les positionnements horizontaux des capteurs de charge sur la périphérie d'une benne de stockage, une préférence est donnée, dans un cas général, à la disposition d'au moins 3 capteurs de charges disposés à distance les uns des autres, en particulier avec au moins un premier capteur disposé à l'avant de la benne de stockage, au moins un deuxième capteur disposé à l'arrière de la benne de stockage et au moins un troisième capteur disposé à distance des autres capteurs selon une direction parallèle à l'axe des trains de roues, de manière à former un polygone de sustentation de la benne de stockage ayant une surface aussi grande que possible.

On peut ainsi disposer au moins trois capteurs de charge suspendant la benne de stockage à la chaise de benne, répartis de manière à ce que deux de ces capteurs soient distants d'au moins 60%, préférablement 70%, encore plus préférablement 80%, de la largeur de la benne de stockage selon une direction sensiblement parallèle à l'axe de train de roues, et à ce que deux de ces capteurs soient distants d'au moins 70%, préférablement 80%, encore plus préférablement 90% d'une longueur de la benne de stockage selon une direction sensiblement horizontale et perpendiculaire à l'axe de train de roue, la benne de stockage étant considérée en position de vendange sur un sol plan horizontal.

Une telle configuration a pour avantages une bonne stabilité mécanique ainsi qu'une répartition homogène des charges à mesurer entre les capteurs, permettant de minimiser les effets de pente ou de dévers, tant pour le maintien mécanique de la benne de stockage que pour la mesure du poids de vendange récoltée.

La disposition de capteurs de charge distants dans une direction parallèle à l'axe de train de roues 110b, et donc dans la largeur de la benne de stockage, permet avantageusement de tenir compte des dévers, la machine à vendanger pouvant pencher à gauche ou à droite en cours de vendange mécanique.

De manière similaire, la disposition de capteurs de charge distants dans une direction perpendiculaire à l'axe de train de roues 110b, et donc dans la longueur de la benne de stockage, permet avantageusement de tenir compte des pentes.

Dans le présent mode de réalisation, chaque benne de stockage est suspendue par 4 capteurs répartis autour de l'ouverture d'entrée de benne : deux en partie avant 121f et deux en partie arrière 121r de la benne de stockage, disposés symétriquement de chaque côté de la benne de stockage, proches de chaque angle du quadrilatère allongé que forme l'ouverture d'entrée de benne lorsque vue d'en haut, maximisant ainsi la surface du polygone de sustentation de la benne de stockage.

Plus spécifiquement, quatre capteurs de charge suspendent la benne de stockage, un premier et un deuxième de ces capteurs de charge étant disposés à l'avant de la benne de stockage et distants l'un de l'autre d'au moins 60%, préférablement 70%, encore plus préférablement 80%, de la largeur de la benne de stockage selon une direction sensiblement parallèle à l'axe de train de roues, un troisième et un quatrième de ces capteurs de charge étant disposés à l'arrière de la benne de stockage et distants l'un de l'autre d'au moins 60%, préférablement 70%, encore plus préférablement 80%, de la largeur de la benne de stockage selon la direction sensiblement parallèle à l'axe de train de roues, le premier et de troisième des capteurs de charge étant distants l'un de l'autre d'au moins 70%, préférablement 80%, encore plus préférablement 90% d'une longueur de la benne de stockage selon une direction sensiblement horizontale et perpendiculaire à l'axe de train de roue, la benne de stockage étant considérée en position de vendange sur un sol plan horizontal.

Le positionnement des capteurs à distance deux à deux, dans une direction d'avancement de la machine et dans une direction perpendiculaire à cette dernière, permet de limiter des erreurs de mesure de la charge de la benne de stockage malgré des positions angulaires de l'axe de mesure différents de l'axe du poids de la benne de stockage en fonction des positions angulaires de la machine à vendanger en pentes ou en dévers et améliore donc la robustesse de la mesure du poids de la benne de stockage dans les pentes quand la machine à vendanger monte ou descend, et même en présence de dévers.

La multiplication de capteurs de charge disposés à distance les uns des autres autour de l'ouverture 121 d'entrée de benne favorise la fiabilisation de la mesure du poids de la benne de stockage et de son contenu, tout en fiabilisant le maintien mécanique de la benne de stockage sur la chaise de benne.

La déposante a ainsi pu mesurer par exemple, en utilisant une machine à vendanger selon le présent mode de revendication, des erreurs inférieures à 1% pour chaque plage de pente de 10% (montée ou descente) du terrain sur lequel la vendange mécanique est pratiquée, montrant ainsi que la déclivité du terrain ne perturbe pas significativement l'évaluation de la quantité de raisin récoltée en cours de vendange mécanique.

Il reste cependant possible de tenir compte d'une mesure d'assiette de la machine à vendanger pour calculer de manière encore plus précise le poids de vendange selon des méthodes connues, en utilisant un dispositif de mesure d'assiette.

Il est également préférable de fixer les premières extrémités 132-1 des capteurs de charge 132 à proximité d'arêtes montantes 120a de la benne de stockage 120, préférentiellement à moins de 30%, plus préférentiellement à moins de 20%, de la largeur 120w de la benne de stockage de l'une des arêtes montantes 120a de la benne de stockage.

Ces arêtes joignent le fond de la benne de stockage à son ouverture d'entrée 121 de la manière illustrée par la figure 2A.

Une telle configuration a pour avantage de rigidifier la fixation de la benne de stockage sur la chaise de benne, ce qui augmente d'une part la stabilité mécanique de l'ensemble et d'autre part la fiabilité de la machine en réduisant la fatigue mécanique.

En partie amont 121f de la benne de stockage, les deux capteurs de charge sont proches de la cabine de pilotage 112 de la machine à vendanger 100.

Comme le montre la figure 3B, ils sont fixés entre les pattes de fixation 120f de la benne de stockage 120 et la chaise de benne 122 en ayant leurs axes longitudinaux 132ax positionnés le long de la paroi latérale avant de la benne de stockage 120, et donc sensiblement parallèles à l'axe de roue 110b.

Cette configuration a pour avantage de limiter l'encombrement de l'ensemble de suspension de la benne de stockage de manière à ce que cette dernière puisse occuper utilement l'espace situé à l'arrière de la cabine de pilotage et donc augmenter le volume de stockage de vendange de la machine de vendange sans augmenter son encombrement global.

En partie aval de la benne de stockage, les contraintes d'encombrement ne sont pas les mêmes, et comme le montre la figure 3C les deux capteurs de charges sont fixés entre les pattes de fixation arrière 120r de la benne de stockage 120 et la chaise de benne 122 en ayant leurs axes longitudinaux perpendiculaires à la paroi latérale arrière de la benne de stockage et donc sensiblement perpendiculaires à l'axe de roue 110b de la machine à vendanger 100.

Dans ce document, les caractéristiques « perpendiculaire » et « parallèle » peuvent s'entendre respectivement comme s'éloignant d'angles valant strictement 90° et 0°, et comprennent respectivement des plages angulaires d'orientations de 90±10° et 0±10°, ce qui peut être dénoté par les expressions « sensiblement parallèle » et « sensiblement perpendiculaire ».

De même, les caractéristiques « vertical » et « horizontal » peuvent s'entendre respectivement comme s'éloignant d'une direction strictement verticale et d'un plan strictement horizontal de ±10°, ce qui peut être dénoté par les expressions « sensiblement vertical » et « sensiblement horizontal ».

D'autres configurations, en nombre et en positionnement de capteurs sont bien entendu possibles, selon la configuration exacte de la machine à vendanger considérée, mais les capteurs doivent être employés en nombre suffisant, de telle sorte que la capacité de charge de l'ensemble de capteurs supportant la benne de stockage soit suffisante pour supporter les poids additionnés de la benne de stockage, de la vendange qu'elle est susceptible de stocker et, le cas échéant, de la table de tri équipant la benne de stockage.

Chacune des deux bennes de stockage 120 de la machine à vendanger 100 peut être équipée en option d'une table de tri 126 fixée à la benne de stockage 120 et située au-dessus de l'ouverture 121 d'entrée de benne.

Une telle table de tri, visible dans les figures 1A à 1C, permet de trier la récolte issue de la vendange mécanique acheminée par l'ensemble de collecte et de convoyage pour rejeter les déchets indésirables (feuilles, pétioles, sarments, morceaux de ceps, ...) et ne conserver essentiellement que la vendange dans la benne de stockage.

Une fois les bennes remplies ou un quota fixé de vendange atteint, la machine à vendanger est amenée à un point de collecte où les bennes de stockage sont vidées.

Ce point de collecte est en général une remorque assurant le transport de la vendange à la cave pour y être vinifiée.

La qualité de la vinification ultérieure est toutefois fonction du temps écoulé entre la vendange mécanique des baies et leur vinification à la cave.

Ce temps devant être le plus court possible pour préserver la qualité de la vendange, la cave doit éviter de recevoir simultanément plusieurs remorques de vendange qui peuvent de fait patienter parfois plusieurs heures avant d'être vinifiées.

Pour limiter ces délais d'attente, la cave peut ainsi imposer des quotas de vendange dans le temps pour assurer la qualité de la vinification, nécessitant alors un contrôle en continu du poids de la vendange accumulée dans les bennes de stockage 120 lors de la vendange mécanique.

A cette fin, la machine à vendanger 100 est équipée d'un dispositif 130 de mesure en continu ou cyclique du poids de la vendange accumulée dans les bennes de stockage, ce dispositif étant relié fonctionnellement aux capteurs de charge 132 de chacune des bennes de stockage comme représenté par la liaison en pointillés de la figure 3A, par exemple par des câbles de connexion électrique 130c.

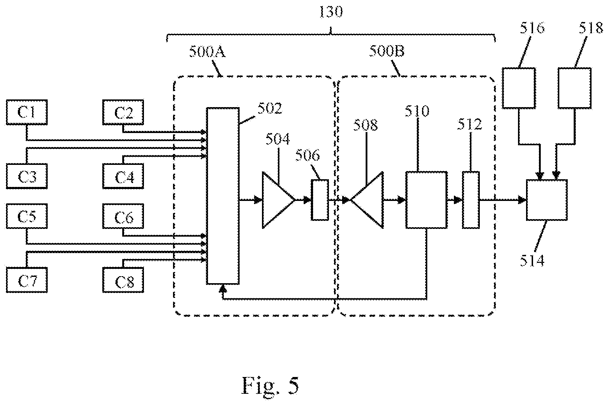

Le dispositif de mesure 130 est un boitier électronique étanche, disposé en hauteur de la machine à vendanger 100 à proximité des différents capteurs de charge, configuré pour alimenter les 8 capteurs de charge 132 des deux bennes de stockage de la machine à vendanger, traiter les signaux 401 à 408 générés respectivement par les huit capteurs de charge 132 désignés par C1 à C8 sur le schéma synoptique de la figure 5, et délivrer de façon continue ou cyclique un signal de mesure représentatif en temps réel du poids de vendange récoltée par la machine à vendanger, poids indiqué en kilogrammes en ordonnée du graphique de la figure 4, l'axe des abscisse représentant le temps en secondes.

Ce signal de mesure est calculé par le dispositif de mesure en se basant sur une somme 400 des signaux 401 à 408 issus des 8 capteurs de charge C1 à C8 et indiquant le poids de vendange stockée dans les deux bennes de stockage 120 de la machine à vendanger 100 de ce mode de réalisation.

Il est bien entendu possible de calculer de façon différenciée le poids de vendange stocké dans chacune des bennes de stockage en sommant séparément les signaux des capteurs fixés à chaque benne de stockage et aboutir ainsi à deux signaux de mesures chacun représentatif en temps réel du poids de vendange stockée dans l'une des deux bennes de stockage.

Le graphique de la figure 4 montre que les capteurs C1 à C8 mesurent, dans cet exemple, des poids proches les uns des autres, ce qui amène les courbes correspondantes à être superposées, les variations de mesures dues par exemple aux déplacements de la machine à vendanger sur un terrain irrégulier n'empêchant pas un suivi fiable de la quantité de vendange récoltée en temps réel avec une variation quasi-linéaire du poids global de vendange avec la durée de récolte, des pauses dans la récolte, et donc dans l'évolution des courbes, intervenant par exemple lors d'un demi-tour pour passer d'un rang de vigne au suivant comme en 412.

La zone 410 illustre les informations issues des capteurs de charge lorsque les bennes de stockage sont basculées pour vidage et montrent alors les incohérences des signaux dans cette phase, les capteurs n'étant par adaptés à la mesure lors du pivotement de la benne de stockage.

Toutefois, les données importantes de la valeur du contenu de la vendange peuvent être transmises de façon fiable et précise en cours de vendange mécanique et avant le pivotement de la benne de stockage.

La communication du poids de vendange accumulée peut en outre être interrompue dès que le vidage est activé.

La figure 5 illustre le dispositif de mesure 130, avec une partie analogique 500A de traitement analogique des signaux, comportant la connexion des signaux analogiques des huit capteurs de charge C1 à C8 à un amplificateur 504 et un filtre RC 506 via un multiplexeur 502.

Une partie numérique 500B du dispositif de mesure comprend un décodeur analogique-numérique 508 recevant les signaux filtrés venant du filtre RC, un microprocesseur 510 pilotant le multiplexeur 502 et traitant les signaux numériques générés par le décodeur 508, et un bus 512 de données séries bidirectionnel de type CAN (Control Area Network) transmettant les signaux numériques traités à une interface homme-machine 514 telle qu'un terminal informatique ayant des capacités de calcul et équipé d'un écran tactile, situé dans la cabine de pilotage.

Ainsi, le dispositif de mesure peut communiquer des valeurs représentatives du poids de la vendange cumulée dans les bennes à un instant donné vers la cabine de pilotage, valeurs obtenues par filtrage et calculs sur les données brutes des capteurs.

Alternativement, ces valeurs représentatives peuvent être envoyées directement à la cave, permettant d'anticiper les opérations de collecte, ou la cave peut définir un objectif de poids de vendange qui définira alors un signal d'alerte envoyé à la machine en cours de vendange ou communiqué au conducteur de la machine à vendanger dès que ce poids de vendange sera proche d'être atteint dans les bennes de stockage.

Il s'agit ici de mesure différentielle, ne prenant en compte que la variation des signaux des capteurs au cours du temps, de manière à ne prendre en compte que le poids de vendange stockée en faisant abstraction du poids de la benne de stockage à vide (en cas d'une benne de stockage équipée d'une table de tri, on peut faire également abstraction du poids de la table de tri).

Les signaux de charge générés par chacun des capteurs sont additionnés par le microprocesseur de manière à obtenir le poids global de la vendange stockée dans l'ensemble des deux bennes de stockage.

Le mode de réalisation décrit ci-dessus illustre la situation d'une machine à vendanger comprenant deux bennes de stockage, mais l'invention s'étend bien entendu aux machines à vendanger comportant un nombre différent de bennes de stockage, tel qu'un, trois ou quatre par exemple, et il est entendu que la somme des signaux de capteurs concerne l'ensemble des capteurs des bennes de stockage considérées, une seule benne le cas échéant dans le cas d'une machine à vendanger n'en comportant qu'une seule.

Il est également possible d'associer les données de mesure à une position instantanée de la machine à vendanger obtenue par un système de positionnement satellite 516 connecté à l'interface 514, de façon à établir une cartographie de rendement de la vigne en cours de vendange.

On peut également utiliser un dispositif 518 de mesure d'assiette connecté à l'interface 514 afin d'opérer une correction d'assiette dans le calcul du poids afin de tenir compte des pentes et des dévers.

On peut aussi utiliser un dispositif de communication de données (GSM ou autres) communiquant les données de façon bilatérale avec la cave par exemple.

Le dispositif de mesure est ici équipé d'un filtre RC conventionnel dans la partie analogique du circuit, mais la méthode de filtration n'est pas limitée à cet exemple, l'essentiel étant de limiter les perturbations dynamiques dues à l'avancée de la machine à vendanger sur un terrain irrégulier ou aux vibrations générées par l'ensemble de secouage.

Les capteurs de charge sont, dans le présent mode de réalisation, des capteurs de charge en flexion, chaque ensemble de capteurs de charge étant arrangé de manière à remplir les deux fonctions de (1) suspension d'une benne de stockage 120 à la chaise de benne 122 correspondante et de (2) mesure du poids de cette benne de stockage et de son contenu, et, le cas échéant, des accessoires dont elle peut être équipée comme par exemple une table de tri.

Il est aussi possible d'étalonner avant chaque vendange mécanique les capteurs en mesurant le poids à vide et ne donner ensuite que l'évolution du poids de la vendange en cours de vendange mécanique.

En ce qui concerne le type des capteurs, on peut par exemple employer des capteurs en flexion de type SB14, produits du constructeur Flintec.

Ces capteurs mesurent chacun une charge dans une seule direction, celle donnée par l'axe longitudinal 133ax des boulons 133 de fixation du capteur, la direction est verticale dans ce mode de réalisation.

En configuration pleine et avec une table de tri, le poids total d'une benne de stockage est de l'ordre de 2200 kg maximum.

Dans le présent mode de réalisation, quatre capteurs de charge en flexion SB14 de type 5000lb ayant chacun une capacité de mesure variant entre -2268 kg et +2268 kg sont employés pour suspendre chaque benne de stockage à la chaise de benne, conduisant à un facteur de surcapacité de mesure supérieur à 4, ce facteur étant évalué par le rapport de la somme des valeurs absolues des capacités des 4 capteurs de charges sur le poids total maximal attendu, soit (2268x4)/2200.

Le poids total attendu pour une benne de stockage correspond au poids additionnés du ou des éléments formant la benne de stockage, le poids maximum de raisin étant considéré comme équivalent au poids d'un volume d'eau égal au volume interne de la benne de stockage, et, le cas échéant, d'une table de tri fixée sur la benne de stockage.

La capacité de mesure d'un capteur correspond à la charge maximale qu'il est capable de supporter et de mesurer selon les données du fournisseur des capteurs.

Les capteurs, assurant la liaison mécanique entre la benne de stockage et la chaise de benne, doivent de fait supporter la benne de stockage quelle que soit la configuration, en phase de vendange mécanique où ils supportent toutes les vibrations et chocs causés par le secouage ou l'avancement de la machine sur un sol parfois chaotique et inégal, mais aussi en phase de vidage.

Une première raison de la surcapacité de mesure des capteurs est que cette surcapacité est indicatrice, non seulement des limites en termes de mesure des capteurs, mais également de leurs limites en termes de résistance mécanique.

Une telle surcapacité permet de s'assurer de la fiabilité mécanique de la suspension, compte tenu de l'irrégularité des terrains de vendange et des vibrations et chocs occasionnée par les différentes opérations de la benne de stockage.

Une deuxième raison de la surcapacité de mesure, d'un facteur supérieur à 4 dans ce mode de réalisation (l'ensemble de 4 capteurs est en capacité de mesurer plus de 4 fois le poids maximum attendu de la benne de stockage en cours d'utilisation), est justifiée par les vibrations du système de secouage conduisant à perturber les signaux de mesure relevés par les capteurs de charge.

Un facteur de surcapacité élevé rend ainsi les capteurs de charge moins sensibles aux vibrations et chocs, amortissant les pics de charge et permettant plus facilement leur correction par un filtrage ultérieur du signal.

Ainsi, le rapport de la somme des valeurs absolues des capacités des capteurs de charges sur le poids total maximal attendu de la benne de stockage est préférablement supérieur à 2, plus préférablement supérieur à 3, encore plus préférablement supérieur à 4.

Il va de soi que la présente invention ne saurait être limitée au mode de réalisation exposé plus haut, susceptible de subir des modifications sans pour autant sortir du cadre des revendications.

## Revendications

1. Machine à vendanger (100) destinée à récolter une vendange, comportant :
- un châssis (116) monté sur au moins un train (110) de roues (110a) qui sont chacune mobiles autour d'un axe (110b) de train de roue, ledit châssis étant arrangé de manière à enjamber un rang de vigne lors d'une vendange mécanique,
- un ensemble de secouage (114) du rang de vigne en liaison mécanique avec le châssis, apte à séparer la vendange du rang de vigne,
- un ensemble de collecte et de convoyage (118) de la vendange de l'ensemble de secouage jusqu'à une ou plusieurs bennes de stockage (120), les bennes de stockage étant chacune fixées à une chaise de benne (122) associée montée pivotante autour d'un arbre pivot de benne (124) lié mécaniquement au châssis pour assurer le vidage des bennes de stockage, et
- un dispositif de mesure (130) de poids de vendange accumulée dans les bennes de stockage,
la machine à vendanger étant **caractérisée en ce que** :
- chaque benne de stockage est reliée à la chaise de benne associée par l'intermédiaire de capteurs de charge (132), les capteurs de charge étant des capteurs en flexion de forme allongée comportant chacun deux extrémités (132-1, 132-2) de fixation, une première extrémité (132-1) de fixation étant fixée à la benne de stockage et une deuxième extrémité (132-2) de fixation étant fixée à la chaise de benne (122) associée de façon à ce que la benne de stockage (120) soit suspendue à la chaise de benne (122) associée,
- les extrémités (132-1, 132-2) de fixation des capteurs de charge sont disposées au-dessus de l'ensemble de secouage (114) lorsque la machine est située sur un sol plan horizontal,
- chaque capteur de charge (132) est alimenté par le dispositif de mesure (130) de poids de vendange pour délivrer à tout moment de la vendange mécanique un signal de capteur (401 à 408), et
- le dispositif de mesure est configuré pour traiter les signaux (401 à 408) des capteurs de charge et délivrer de façon continue ou cyclique un signal de mesure (400) représentatif d'un poids de vendange accumulée par la machine à vendanger dans les bennes de stockage.

2. Machine à vendanger selon la revendication 1, dans laquelle, pour chaque benne de stockage, les extrémités de fixation des capteurs de charge sont disposées au-dessus d'un centre de gravité (150) de la benne de stockage lorsque la machine est située sur un sol plan horizontal.

3. Machine à vendanger selon la revendication 1 ou 2, dans laquelle, pour chaque benne de stockage, lorsque la machine est située sur un sol plan horizontal, le centre de gravité de la benne de stockage à vide est situé à plus de 15% d'une profondeur (120d) de la benne de stockage sous les extrémités (132-1, 132-2) de fixation.

4. Machine à vendanger selon l'une quelconque des revendications 1 à 3, laquelle comprend, pour chaque benne de stockage, au moins trois capteurs de charge (132) suspendant la benne de stockage (120) à la chaise de benne (122), répartis de manière à ce que deux de ces capteurs soient distants d'au moins 60% de la largeur (120w) de la benne de stockage selon une direction sensiblement parallèle à l'axe (110b) de train de roues, et à ce que deux de ces capteurs soient distants d'au moins 70% d'une longueur (120l) de la benne de stockage selon une direction sensiblement horizontale et perpendiculaire à l'axe de train de roue, la benne de stockage étant considérée en position de vendange mécanique sur un sol plan horizontal.

5. Machine à vendanger selon la revendication 4, laquelle comprend, pour chaque benne de stockage, quatre capteurs de charge (132) suspendant la benne de stockage (120), un premier et un deuxième de ces capteurs étant disposés à une partie avant (121f) de la benne de stockage, et distants l'un de l'autre d'au moins 60% de la largeur (120w) de la benne de stockage selon une direction sensiblement parallèle à l'axe de train de roues (110b), un troisième et un quatrième de ces capteurs de charge étant disposés à une partie arrière (121r) de la benne de stockage et distants l'un de l'autre d'au moins 60% de la largeur de la benne de stockage, le premier et de troisième des capteurs de charge étant distants l'un de l'autre d'au moins 70% de la longueur (120l) de la benne de stockage selon une direction sensiblement horizontale et perpendiculaire à l'axe de train de roue, la benne de stockage étant considérée en position de vendange sur un sol plan horizontal.

6. Machine à vendanger selon l'une quelconque des revendications 1 à 5, dans laquelle, pour chaque benne de stockage, la benne de stockage comporte des arêtes montantes (120a) de benne, les premières extrémités (132-1) de fixation des capteurs de charge étant fixées à moins de 20% d'une largeur (120w) de la benne de stockage de l'une desdites arêtes montantes de benne.

7. Machine à vendanger selon l'une quelconque des revendications 1 à 6, dans laquelle, pour chaque benne de stockage, au moins un des capteurs de charges est situé entre la benne de stockage (120) et une cabine de pilotage (112) de la machine à vendanger et a un axe longitudinal (132ax) sensiblement parallèle à l'axe de train de roues (110b) de la machine à vendanger.

8. Machine à vendanger selon l'une quelconque des revendications 1 à 7, dans laquelle, pour chaque benne de stockage, un rapport d'une somme de valeurs absolues des capacités des capteurs de charges sur un poids total maximal attendu de la benne de stockage est supérieur à 2.

## Patentansprüche

1. Weinlesemaschine (100), die dazu bestimmt ist, eine Weinlese zu ernten, umfassend:
- ein Fahrgestell (116), das auf mindestens einem Satz (110) von Rädern (110a) montiert ist, die jeweils um eine Achse (110b) des Radsatzes beweglich sind, wobei das Fahrgestell so angeordnet ist, dass es bei einer mechanischen Weinlese eine Rebzeile übersteigt,
- eine Rütteleinheit (114) der Rebzeile in mechanischer Verbindung mit dem Fahrgestell, die dazu geeignet ist, die Weinlese von der Rebzeile zu trennen,
- eine Sammel- und Fördereinheit (118) für die Weinlese von der Schütteleinheit bis zu einem oder mehreren Lagerkippbehältern (120), wobei die Lagerkippbehälter jeweils an einem zugehörigen Kippbehälterstuhl (122) befestigt sind, der um eine Kippbehälterschwenkwelle (124) schwenkbar montiert ist, die mechanisch mit dem Fahrgestell verbunden ist, um das Entleeren der Lagerkippbehälter zu gewährleisten, und
- eine Messvorrichtung (130) für das in den Lagerkippbehältern akkumulierte Weinlesegewicht,
wobei die Weinlesemaschine **dadurch gekennzeichnet ist, dass:**
- jeder Lagerkippbehälter über Lastsensoren (132) mit dem zugehörigen Kippbehälterstuhl verbunden ist, wobei es sich bei den Lastsensoren um länglich geformte Biegesensoren handelt, die jeweils zwei Befestigungsenden (132-1, 132-2) umfassen, wobei ein erstes Befestigungsende (132-1) am Lagerkippbehälter befestigt ist und ein zweites Befestigungsende (132-2) am zugehörigen Kippbehälterstuhl (122) befestigt ist, so dass der Lagerkippbehälter (120) am zugehörigen Kippbehälterstuhl (122) aufgehängt ist,
- die Befestigungsenden (132-1, 132-2) für die Lastsensoren über der Rütteleinheit (114) angeordnet sind, wenn sich die Maschine auf einem ebenen, horizontalen Boden befindet,
- jeder Lastsensor (132) von der Messvorrichtung (130) für das Weinlesegewicht mit Strom versorgt wird, um zu jedem Zeitpunkt der mechanischen Weinlese ein Sensorsignal (401 bis 408) zu liefern, und
- die Messvorrichtung so eingerichtet ist, dass sie die Signale (401 bis 408) der Lastsensoren verarbeitet und kontinuierlich oder zyklisch ein Messsignal (400) liefert, das für ein von der Weinlesemaschine in den Lagerkippbehältern akkumuliertes Weinlesegewicht repräsentativ ist.

2. Weinlesemaschine nach Anspruch 1, wobei für jeden Lagerkippbehälter die Befestigungsenden der Lastsensoren oberhalb eines Schwerpunkts (150) des Lagerkippbehälters angeordnet sind, wenn sich die Maschine auf einem ebenen, horizontalen Boden befindet.

3. Weinlesemaschine nach Anspruch 1 oder 2, wobei sich der Schwerpunkt des leeren Lagerkippbehälters bei jedem Lagerkippbehälter, wenn sich die Maschine auf einem ebenen, horizontalen Boden befindet, mehr als 15 % einer Tiefe (120d) des Lagerkippbehälters unter den Befestigungsenden (132-1, 132-2) befindet.

4. Weinlesemaschine nach einem der Ansprüche 1 bis 3, die für jeden Lagerkippbehälter mindestens drei Lastsensoren (132) umfasst, die den Lagerkippbehälter (120) am Kippbehälterstuhl (122) aufhängen und so verteilt sind, dass zwei dieser Sensoren in einer Richtung, die im Wesentlichen parallel zur Achse (110b) des Radsatzes verläuft, um mindestens 60 % der Breite (120w) des Lagerkippbehälters beabstandet sind, und dass zwei dieser Sensoren um mindestens 70 % einer Länge (1201) des Lagerkippbehälters in einer im Wesentlichen horizontalen und zur Achse des Radsatzes senkrechten Richtung beabstandet sind, wobei der Lagerkippbehälter in der Position der mechanischen Weinlese auf einem ebenen, horizontalen Boden betrachtet wird.

5. Weinlesemaschine nach Anspruch 4, die für jeden Lagerkippbehälter vier Lastsensoren (132) umfasst, die den Lagerkippbehälter (120) aufhängen, wobei ein erster und ein zweiter dieser Sensoren an einem vorderen Teil (121f) des Lagerkippbehälters angeordnet sind und in einer Richtung, die im Wesentlichen parallel zur Achse des Radsatzes (110b) verläuft, um mindestens 60 % der Breite (120w) des Lagerkippbehälters voneinander beabstandet sind, wobei ein dritter und ein vierter dieser Lastsensoren an einem hinteren Teil (121r) des Lagerkippbehälters angeordnet sind und um mindestens 60 % der Breite des Lagerkippbehälters voneinander beabstandet sind, wobei der erste und der dritte der Lastsensoren um mindestens 70 % der Länge (1201) des Lagerkippbehälters in einer im Wesentlichen horizontalen und zur Achse des Radsatzes senkrechten Richtung voneinander beabstandet sind, wobei der Lagerkippbehälter in der Position der Weinlese auf einem ebenen, horizontalen Boden betrachtet wird.

6. Weinlesemaschine nach einem der Ansprüche 1 bis 5, wobei für jeden Lagerkippbehälter der Lagerkippbehälter ansteigende Kanten (120a) des Kippbehälters umfasst, wobei die ersten Befestigungsenden (132-1) für die Lastsensoren bei weniger als 20 % einer Breite (120w) des Lagerkippbehälters einer der ansteigenden Kanten des Kippbehälters befestigt sind.

7. Weinlesemaschine nach einem der Ansprüche 1 bis 6, wobei sich für jeden Lagerkippbehälter mindestens einer der Lastsensoren zwischen dem Lagerkippbehälter (120) und einer Steuerkabine (112) der Weinlesemaschine befindet und eine Längsachse (132ax) aufweist, die im Wesentlichen parallel zur Achse des Radsatzes (110b) der Weinlesemaschine verläuft.

8. Weinlesemaschine nach einem der Ansprüche 1 bis 7, wobei für jeden Lagerkippbehälter ein Verhältnis einer Summe von absoluten Werten der Kapazitäten der Lastsensoren zu einem maximal erwarteten Gesamtgewicht des Lagerkippbehälters größer als 2 ist.

## Claims

1. Harvesting machine (100) intended for harvesting grapes, including:
- a chassis (116) mounted on at least one train (110) of wheels (110a) which are each movable about a wheel-train axle (110b), said chassis being arranged so as to straddle a row of vines during a mechanical harvest,
- a vine-row shaker assembly (114) in mechanical connection with the chassis, capable of separating the grape harvest from the vine row,
- an assembly (118) for collecting the harvest from the shaking assembly and conveying it to one or more storage bins (120), the storage bins each being attached to an associated bin seat (122) mounted pivotally around a bin pivot shaft (124) mechanically connected to the chassis to ensure emptying of the storage bins, and
- a measuring device (130) for harvest weight accumulated in the storage bins,
the harvesting machine being **characterised in that:**
- each storage bin is connected to the associated bin seat via load sensors (132), the load sensors being elongate flexion sensors each including two attachment ends (132-1, 132-2), a first attachment end (132-1) being attached to the storage bin and a second attachment end (132-2) being attached to the associated bin seat (122) so that the storage bin (120) is suspended from the associated bin seat (122),
- the fastening ends (132-1, 132-2) of the load sensors are disposed above the shaking assembly (114) when the machine is located on a horizontal flat floor,
- each load sensor (132) is supplied by the harvest weight measuring device (130) to deliver a sensor signal (401 to 408) at any time during the mechanical harvest, and
- the measuring device is configured to process the signals (401 to 408) of the load sensors and to continuously or cyclically deliver a measuring signal (400) representing a harvest weight accumulated by the harvesting machine in the storage bins.

2. Harvesting machine according to claim 1, wherein, for each storage bin, the attachment ends of the load sensors are disposed above a centre of gravity (150) of the storage bin when the machine is located on a horizontal flat floor.

3. Harvesting machine according to claim 1 or 2, wherein, for each storage bin, when the machine is located on a horizontal flat floor, the centre of gravity of the storage bin when empty is located at more than 15% of a depth (120d) of the storage bin under the fastening ends (132-1, 132-2).

4. Harvesting machine according to any one of claims 1 to 3, which comprises, for each storage bin, at least three load sensors (132) suspending the storage bin (120) from the bin seat (122), distributed so that two of these sensors are distant by at least 60% of the width (120w) of the storage bin in a direction substantially parallel to the wheel-train axle (110b), and so that two of these sensors are distant by at least 70% of a length (1201) of the storage bin in a substantially horizontal direction and perpendicular to the wheel-train axle, the storage bin being considered in the mechanical harvesting position on a horizontal level ground.

5. Harvesting machine according to claim 4, which comprises, for each storage bin, four load sensors (132) suspending the storage bin (120), a first and a second of these sensors being disposed at a front portion (121f) of the storage bin, and spaced apart from one another by at least 60% of the width (120w) of the storage bin in a direction substantially parallel to the wheel-train axle (110b), a third and a fourth of these load sensors being disposed at a rear portion (121r) of the storage bin and distant from one another by at least 60% of the width of the storage bin, the first and third of the load sensors being distant from one another by at least 70% of the length (1201) of the storage bin in a direction substantially horizontal and perpendicular to the wheel train axis, the storage bin being considered in the harvesting position on a horizontal level ground.

6. Harvesting machine according to any one of claims 1 to 5, wherein, for each storage bin, the storage bin includes rising edges (120a) of the bin, the first ends (132-1) for fastening the load sensors being fastened at less than 20% of a width (120w) of the storage bin from one of said bin rising edges.

7. Harvesting machine according to any one of claims 1 to 6, wherein, for each storage bin, at least one of the load sensors is located between the storage bin (120) and a control cab (112) of the harvesting machine and has a longitudinal axis (132ax) substantially parallel to the wheel-train axle (110b) of the harvesting machine.

8. Harvesting machine according to any one of claims 1 to 7, wherein, for each storage bin, a ratio of a sum of absolute values of the capacities of the load sensors to an expected maximum total weight of the storage bin is greater than 2.
